# FASCICULE DE BREVET EUROPEEN

(11) **EP 0 606 797 B1**
(45) Date de publication et mention de la délivrance du brevet: **13.05.1998**
(21) Numéro de dépôt: 93403082.6
(22) Date de dépôt: 17.12.1993
(51) Int. Cl.: G03G 15/20, H04N 1/29

(54) **Procédé et dispositif d'impression électrostatique à fixage par rouleau chauffant**
Elektrostatisches Druckverfahren und Gerät mit Heizwalze Fixierung
Electrostatic printing method and device using heat roll fixing

(30) Priorité: 21.12.1992 FR 9215361
(43) Date de publication de la demande: 20.07.1994
(73) Titulaire: SAGEM SA, F-75783 Paris Cédex 16 (FR)
(72) Inventeur: Vegeais, Patrick, F-78112 Fourqueux (FR)
(74) Mandataire: Fort, Jacques

(56) Documents cités:
- EP-A- 0 316 010
- JP-A-61 198 263
- US-A- 5 063 459
- US-A- 5 151 573
- PATENT ABSTRACTS OF JAPAN vol. 16, no. 508 (E-1282)(5551) 20 Octobre 1992 & JP-A-04 189 063 (BROTHER IND LTD) 7 Juillet 1992
- PATENT ABSTRACTS OF JAPAN vol. 10, no. 179 (E-414)(2235) 24 Juin 1986 & JP-A-61 029 261 (CANON INC) 10 Février 1986
- PATENT ABSTRACTS OF JAPAN vol. 13, no. 341 (P-907)(3689) 31 Juillet 1989 & JP-A-01 100 583 (TOKYO ELECTRIC CO LTD) 18 Avril 1989
- PATENT ABSTRACTS OF JAPAN vol. 11, no. 26 (P-539)(2473) 24 Janvier 1987 & JP-A-61 198 263 (CANON INC) 2 Septembre 1986

## Description

L'invention concerne les procédés et dispositifs d'impression par voie électro-photographique. Un faisceau lumineux, généralement fourni par une diode laser, est modulé par un signal vidéo entrant et est focalisé sur un tambour photosensible rotatif pour générer, en chaque point du tambour, une charge électrostatique qui est fonction de l'éclairement. On dépose sur le tambour photosensible une encre sèche en quantité proportionnée aux charges déposées, on transfère l'encre sèche sur le papier par un champ électrique et on fixe l'encre sur le papier par pressage et chauffage à une température suffisante.

L'invention trouve une application particulièrement importante dans les télécopieurs à impression sur papier normal. Toutefois, elle est applicable à d'autres systèmes et par exemple à la constitution d'imprimantes destinées à être reliées à un ordinateur personnel ou domestique.

L'invention vise notamment à écarter une contrainte de l'impression laser qui constitue un inconvénient pour certaines applications et a conduit à lui préférer alors d'autres types d'impression, en dépit des désavantages de ces autres types.

Pour être immédiatement disponible à tout instant, une imprimante mettant en oeuvre le procédé ci-dessus comporte des moyens de fixation maintenus en permanence à la température requise. La chaleur évacuée par ces moyens doit être dissipée à l'atmosphère, de façon à ne pas porter à une température excessive les autres éléments de l'imprimante. On utilise pour cela un ventilateur qui fonctionne en permanence, aussi bien en régime de veille qu'en régime de fonctionnement. Le niveau sonore de ce ventilateur, qui dépasse en général 43 dB, est acceptable lorsque l'imprimante se trouve dans un local bruyant. En revanche, il est inacceptable dans le cas d'un télécopieur simple, destiné à être placé sur un bureau. Ce niveau sonore a conduit jusqu'ici à adopter, pour une telle application, des imprimantes sur papier thermique en dépit des inconvénients de ce support (coût élevé et caractère impropre à l'archivage de longue durée). Le même problème existe dans le cas d'une imprimante placée à côté d'un micro-ordinateur personnel ou domestique.

Pour écarter ce défaut, l'invention propose notamment un procédé selon la revendication 1.

L'invention propose également un dispositif d'impression permettant de mettre en oeuvre le procédé ci-dessus défini, conforme à la revendication 5.

L'invention sera mieux comprise à la lecture de la description qui suit d'un mode particulier de réalisation, donné à titre d'exemple non-limitatif. La description se réfère aux dessins qui l'accompagnent, dans lesquels :
- la figure 1 est un schéma de principe montrant un dispositif d'impression de constitution générale couramment utilisée dans un télécopieur à impression laser ;
- la figure 2 est un synoptique de principe, montrant les éléments à adjoindre à un dispositif d'impression classique, tel que celui de la figure 1, pour mettre en oeuvre l'invention.

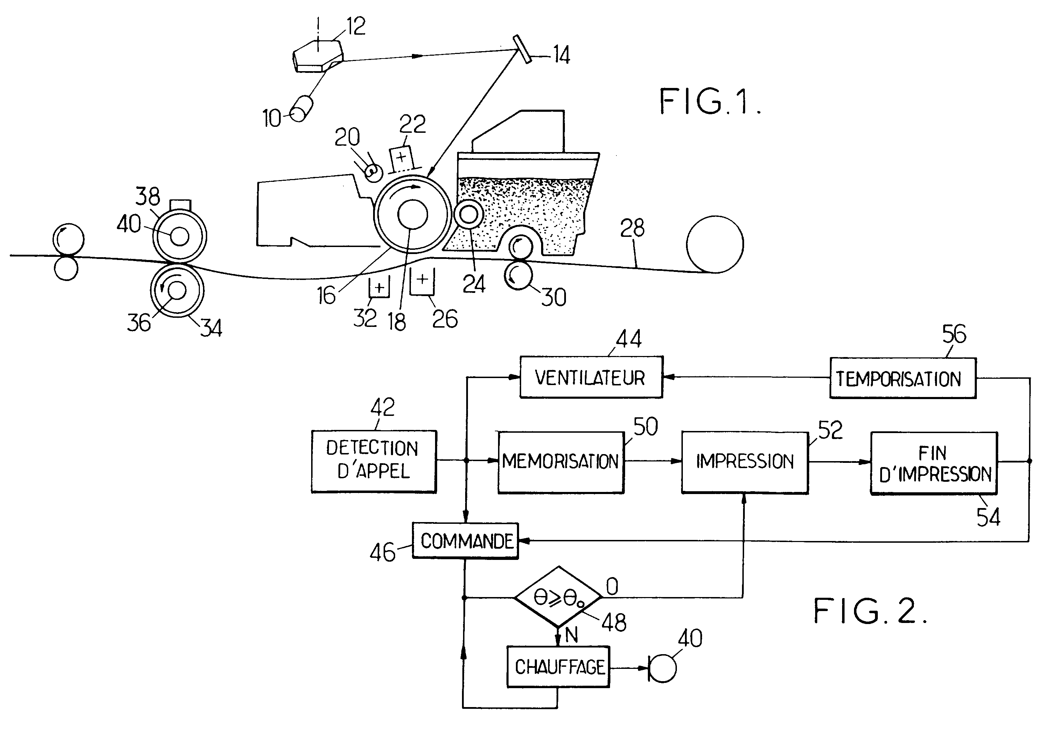

L'imprimante pour télécopieur dont le schéma de principe est montré en figure 1 comporte une source de lumière 10 (diode laser en général) fournissant un faisceau qui est focalisé, puis reçu par un miroir polyédrique 12 de balayage en ligne et renvoyé par un miroir de repliement 14 sur un tambour photosensible 16 entraîné en rotation, généralement de façon continue, par un moteur 18. Ce tambour, de quelques centimètres de diamètre en général, est couvert d'une couche de matériau photoconducteur (matériau organique ou sélénium). Chaque génératrice du tambour 16 à son tour passe successivement devant une lampe 20 d'élimination de charges négatives résiduelles, un générateur Corona 22 de dépôt uniforme de charges électrostatiques négatives sur le tambour 16 et l'emplacement d'exposition au faisceau lumineux. Le faisceau décharge la surface du tambour en chaque point en fonction de l'irradiation reçue par ce point. L'invention serait également applicable à une imprimante mettant en oeuvre des charges positives et une encre sèche appropriée.

Chaque génératrice du tambour passe ensuite à un emplacement de développement où l'image latente du tambour photosensible est transformée en image visible par dépôt d'une encre sèche. Cette encre est généralement à deux composants et entraînée par un rouleau magnétique tournant à l'intérieur d'un manchon 24. L'encre adhère au tambour 16 sur les zones qui ont été exposées au faisceau de lumière, avec une densité de dépôts qui dépend du degré d'exposition. A un poste de transfert où un générateur 26 crée une décharge Corona, l'encre sèche est transférée sur une feuille de papier 28 amenée par un mécanisme d'approvisionnement 30. Le papier, éventuellement déchargé par passage à un poste 32, traverse enfin un poste de fixation. Classiquement, l'encre sèche est fixée par pressage et chauffage. Pour cela, le poste comprend un rouleau presseur 34 entraîné par un moteur 36 (ou plus fréquemment un renvoi à partir du moteur principal 18) et un rouleau de chauffage 38 qu'un organe de chauffage central 40, généralement constitué par une lampe à halogène, maintient à une température régulée, d'environ 500°C avec les encres sèches habituelles.

Une sonde détecte la température du tambour 38 et allume la lampe dès qu'elle descend au-dessous d'une valeur déterminée Θ₀. La lampe s'éteint lorsqu'une autre température Θ₁, supérieure à Θ₀, est dépassée.

Pour éviter que la chaleur dégagée par le tambour 38 et la lampe 40 n'endommage d'autres composants du télécopieur, des moyens d'évacuation de la chaleur sont nécessaires. Sur les télécopieurs actuels, il s'agit d'un ventilateur électrique (non représenté sur la figure 1) qui fonctionne en permanence lorsque le télécopieur est en service, qu'il soit à l'état de veille ou à l'état d'impression ou d'émission. Le niveau sonore d'un tel ventilateur est généralement compris entre 43 et 48 dB et se place dans des fréquences relativement aigues. Il est en conséquence gênant dans une ambiance de bureau.

L'invention permet de limiter le fonctionnement du ventilateur aux intervalles de temps d'impression, particulièrement peu fréquents dans le cas de télécopieurs de bureau utilisés à titre d'appoint.

Pour cela, le chauffage des moyens de fixation est arrêté en dehors des périodes d'impression, ce qui permet de laisser également le ventilateur arrêté. Ce ventilateur peut être arrêté, après fin d'impression et de chauffage, soit au bout d'un délai déterminé, soit dès qu'une sonde thermique indique que la température à proximité du tambour a diminué au-dessous d'une valeur donnée Θ₂, inférieure à Θ₀.

En contrepartie, ce mode de fonctionnement implique que, lors de la réception d'un message, on mémorise les données jusqu'à ce que la mise en oeuvre des moyens de chauffage ait porté le tambour de fixation 38 à la température de consigne Θ₀. Dans le cas d'un télécopieur bas de gamme, l'inertie thermique du tambour est faible et il suffit d'une durée de quelques dizaines de secondes à une minute environ pour faire passer la température du tambour de la température ambiante à la température Θ₀, avec une lampe halogène de forte puissance (quelques centaines de Watts). Le chauffage peut être commandé dès le début du déroulement du protocole de liaison, qui dure de 4 à 10 secondes en général pour un télécopieur. Il suffit en conséquence d'un volume de mémoire vive (statique ou dynamique) de quelques centaines de koctets. Plus précisément, dans le cas d'un télécopieur prévu pour l'enregistrement d'un document reçu à cadence de 14,4 Kbits/s, avec une durée maximale de préchauffage de 60 secondes, une capacité mémoire minimale de 100 koctets est nécessaire. Mais les télécopieurs sur le marché ont une taille minimale de 256 koctets, de sorte que la nécessité d'une mémoire temporaire ne constitue pas une contrainte réellement gênante.

Le procédé utilisé peut être celui schématisé sur la figure 2, implémentable par voie logicielle ou câblée sans difficulté, n'exigeant que l'adjonction de quelques composants à une imprimante classique de télécopieur. La détection d'un appel entrant en 42 peut provoquer l'alimentation immédiate ou retardée du moteur électrique du ventilateur 44, par fermeture d'un relais et le lancement du préchauffage de la station de fixation. Ce préchauffage est commandé par une boucle ayant un organe d'entrée 46 mis en position active par la détection d'appel, un test 48 de détermination si la température du tambour est inférieure à la valeur Θ₀ de consigne et de chauffage jusqu'à température de consigne si nécessaire. Le moteur du ventilateur peut aussi bien être commandé par une sonde de température.

Dès la fin du déroulement du protocole de liaison, les documents reçus sont mémorisés en 50. L'impression 52 commence lorsque le test 48 indique que la température Θ₀ a été atteinte. L'impression s'effectue de façon classique, à partir des données mémorisées.

Lorsque l'ensemble des documents constituant le message a été reçu, un détecteur 54 de fin d'impression rend inactif l'organe de commande 46, immédiatement ou à l'issue d'une temporisation de quelques minutes. La fin d'impression commande également l'arrêt du ventilateur 44, éventuellement après une temporisation de quelques minutes en 56. Cette temporisation peut être remplacée par une commande d'arrêt une fois qu'une sonde indique que la température du tambour est revenue à une valeur donnée. La montée en température des moyens de fixation peut être maintenue pendant un temps déterminé après la fin d'impression de sorte que si une nouvelle impression est demandée avant expiration de ce temps, elle puisse être prise en compte immédiatement.

Comme cela a déjà été indiqué plus haut, l'invention est également applicable à des imprimantes destinées à être associées à des micro-ordinateurs ou ordinateurs domestiques, ayant un fonctionnement relativement peu fréquent.

Dans tous les cas, l'invention réduit notablement les périodes d'émission de bruit. Au surplus, elle augmente la fiabilité de la station de fixation et la durée de vie des moyens de chauffage (lampe halogène) puisqu'ils ne sont portés à la température de fonctionnement que lorsque cela est utile, et non pas en permanence. Elle n'exige que l'adjonction de quelques composants et éventuellement de quelques instructions au programme de fonctionnement de l'imprimante.

## Revendications

1. Procédé d'impression sur support papier, pour télécopieur ou imprimante reliée à un ordinateur, suivant lequel on module un faisceau lumineux et on le focalise sur un tambour photosensible rotatif (16) pour générer, en chaque point du tambour, une charge électrostatique qui est fonction de l'éclairement pour constituer une image latente, on dépose sur le tambour photosensible une encre sèche en quantité proportionnée aux charges déposées, on transfère l'encre sèche sur le support papier (28) par un champ électrique et on fixe l'encre sur le papier par pressage et chauffage par des moyens de chauffage,
caractérisé en ce que :
dès détection d'une demande d'impression entrante, on détermine si des moyens de fixation thermique sont à une température inférieure à une valeur requise déterminée,
on commande le chauffage des moyens de fixation (36-40) dans le cas où la température de ces moyens est inférieure à ladite valeur requise, de façon à amener et maintenir la température au moins à ladite valeur requise,
on mémorise les données entrantes dans une mémoire vive au fur et à mesure de leur arrivée, dès la fin du déroulement du protocole de liaison,
on provoque l'impression dès que la température requise est atteinte et
on ne fait fonctionner le moteur d'un ventilateur (44) d'évacuation de la chaleur, provenant des moyens de fixation qu'à partir de la détection d'une demande entrante et pendant un temps limité après la fin de l'impression et du chauffage.

2. Procédé selon la revendication 1, caractérisé en ce que l'on alimente le moteur aussi longtemps que la température détectée par une sonde dépasse une valeur déterminée.

3. Procédé selon la revendication 1 ou 2, caractérisé en ce que l'on alimente le moteur pendant le chauffage et pendant un intervalle de temps déterminé après la fin du chauffage.

4. Procédé selon la revendication 1, 2 ou 3, caractérisé en ce qu'on maintient le chauffage des moyens de fixation (36-40) pendant une durée déterminée après la fin d'impression.

5. Dispositif d'impression par voie électrophotographique d'information arrivant sous forme de message, comprenant une source lumineuse (10) fournissant un faisceau modulé par le signal entrant et balayant un tambour rotatif photosensible (16), des moyens de transfert de charges électrostatiques fonction de l'éclairement sur le tambour, des moyens (24) de transfert d'encre sèche sur le tambour avec une densité fonction de l'éclairement, des moyens (26) de transfert d'encre du tambour à un support papier, des moyens (34-38) de fixation de l'encre par pressage et chauffage à une température déterminée, munis de moyens de chauffage (40) et un ventilateur d'évacuation de la chaleur dégagée par les moyens de fixation (34-38), caractérisé en ce que le dispositif comprend des moyens pour, en réponse à une demande d'impression d'un message entrant, mémoriser l'information à imprimer en mémoire vive, commander l'alimentation des moyens de chauffage (40) jusqu'à obtention d'une température de consigne (Θ₀) et provoquer l'impression dès que la température de consigne est atteinte et des moyens pour couper l'alimentation d'un moteur d'entraînement du ventilateur en dehors des périodes de chauffage.

6. Dispositif selon la revendication 5, caractérisé en ce que les moyens de coupure de l'alimentation sont commandés par une sonde de température ou comportent une temporisation après fin d'impression.

7. Dispositif selon la revendication 5 ou 6, caractérisé en ce qu'il maintient les moyens de chauffage alimentés jusqu'à l'expiration d'un délai de temporisation.

## Patentansprüche

1. Verfahren zum Drucken auf einen Papierträger für einen Telekopierer oder Drucker, der mit einem Computer verbunden ist, bei dem man ein Lichtbündel moduliert und dieses auf eine drehbare fotosensible Walze (16) focussiert, um in jedem Punkt der Walze eine elektrostatische Ladung zu erzeugen, die eine Funktion der Beleuchtung ist, um ein latentes Bild zu bilden, man auf der fotosensiblen Walze eine trockene Tinte in einer Menge ablegt, die auf die abgelegten Ladungen abgestimmt ist, man die trockene Tinte auf den Papierträger (28) durch ein elektrisches Feld überträgt und man die Tinte auf dem Papier durch Druck und Wärmeaufbringung mittels Erwärmungsmitteln befestigt,
dadurch gekennzeichnet,
daß man nach Detektion einer eingehenden Druckaufforderung bestimmt, ob die thermischen Befestigungsmittel sich auf einer Temperatur unterhalb eines vorbestimmten erforderlichen Wertes befinden, daß man die Erwärmung der Befestigungsmittel (36-40) in dem Falle steuert, wo die Temperatur dieser Mittel unterhalb des besagten erforderlichen Wertes ist, derart, um die Temperatur wenigstens auf den besagten erforderlichen Wert zu bringen und zu halten, daß man die eingehenden Daten in einem flüchtigen Speicher der Reihe nach nach ihrem Eingang speichert, von dem Ende der Abwicklung des Verbindungsprotokolls, daß man den Druck bewirkt, sobald die erforderliche Temperatur erreicht ist, und daß man den Motor eines Ventilators (44) zur Abführung der Wärme, die aus den Befestigungsmitteln stammt, nur funktionieren läßt, ausgehend von der Entdeckung einer eingehenden Anforderung, während einer begrenzten Zeit nach dem Ende des Druckens und der Erwärmung.

2. Verfahren nach Anspruch 1,
dadurch gekennzeichnet,
daß man den Motor solange mit Energie versorgt, wie die durch eine Sonde detektierte Temperatur einen vorbestimmten Wert überschreitet.

3. Verfahren nach Anspruch 1 oder 2,
dadurch gekennzeichnet,
daß man den Motor während der Erwärmung und während eines bestimmten Zeitintervalls nach dem Ende der Erwärmung mit Energie versorgt.

4. Verfahren nach Anspruch 1, 2 oder 3,
dadurch gekennzeichnet,
daß man die Erwärmung der Befestigungsmittel (36-40) während einer vorbestimmten Zeitdauer nach dem Ende des Druckens aufrechterhält.

5. Vorrichtung zum Drucken auf elektrofotografische Weise von Informationen, die in Form einer Nachricht ankommen, mit einer Lichtquelle (10), die ein durch das eintretende Signal moduliertes Bündel liefert und eine drehbare fotosensible Walze (16) abtastet, mit Mitteln zur Übertragung elektrostatischer Ladungen in Funktion der Beleuchtung auf die Walze, mit Mitteln (24) zur Übertragung von trockener Tinte auf die Walze mit einer Dichte in Abhängigkeit von der Beleuchtung, mit Mitteln (26) zur Übertragung von Tinte von der Walze auf einen Papierträger, mit Mitteln (34-38) zur Befestigung der Tinte durch Druck und Erwärmung auf eine vorbestimmte Temperatur, welche mit Mitteln zur Erwärmung (40) und einem Ventilator zur Abführung der Wärme versehen sind, die durch die Befestigungsmittel (34-38) erzeugt wird,
dadurch gekennzeichnet,
daß die Vorrichtung Mittel zum Speichern der zu druckenden Information in einem flüchtigen Speicher in Antwort auf eine Druckanforderung einer eintretenden Nachricht, zum Steuern der Energieversorgung der Erwärmungsmittel (40) bis zum Erreichen einer vorgeschriebenen Temperatur (θ₀) und zum Bewirken des Druckens, sobald die vorbestimmte Temperatur erreicht worden ist, und mit Mittel zum Abschneiden der Energieversorgung des Antriebsmotors des Ventilators außerhalb der Erwärmungsperiode aufweist.

6. Vorrichtung nach Anspruch 5,
dadurch gekennzeichnet,
daß die Mittel zum Abschneiden der Energieversorgung von einer Temperatursonde gesteuert sind oder eine Verzögerung nach dem Druckende aufweisen.

7. Vorrichtung nach Anspruch 5 oder 6,
dadurch gekennzeichnet,
daß diese die Mittel zur Erwärmung mit Energie versorgt hält bis zum Ablauf eines Endes einer Verzögerung.

## Claims

1. Method for printing on a paper substrate, for a telecopier or a computer connected printer, including the steps of modulating a light beam and focusing it on a rotative photosensitive drum (16) for generating, on each point of the drum, an electrostatic charge which is related to the amount of light and constitute a latent image, depositing toner on the photo-sensitive drum in an amount which is in proportion to the deposited charges, transferring the toner onto the paper substrate 28 with an electric field and fixing the toner on the paper by pressing and heating with heating means,
characterized by :
determining if thermal fixation means are at a temperature lower than a predetermined required value,as soon as there is an incoming printing request,
controlling heating of the fixation means (36-40) if the temperature of said means is lower than said required value, for bringing the temperature to and maintaining it at at least said required value,
storing incoming data in a read and write memory as they are received, immediately after the end of the connection protocole,
printing as soon as the required temperature is reached, and
only operating the motor of a blower (44) for dissipating heat originating from the fixation means after detection of an incoming request and during a limited time after the end of printing and heating.

2. Method according to claim 1, characterized by energizing the motor as long as a temperature detected by a sensor exceeds a predetermined value.

3. Method according to claim 1 or 2, characterized by energizing the motor during heating and during a predetermined time interval after the end of heating.

4. Method according to claim 1, 2 or 3, characterized by maintaining heating of the fixation means (36-40) for a printer time duration after the end of printing.

5. Device for electro-photographically printing data incoming as a message, comprising a light source (10) delivering a beam which is modulated by the incoming signal and scanning a photo-sensitive rotating drum (16), means for transferring electrostatic charges which are related to the amount of light onto the drum, means (24) for transferring toner onto the drum with a density which is related to the amount of light, means (26) for transferring the toner from the drum to a paper substrate, means (34-38) for fixing the toner by pressing and heating to a predetermined temperature, having heating means (40) and a blower for dissipating heat originating from the fixation means (34-38), characterized in that the device comprises means, responsive to the request for printing an incoming message, for storing the data to be printed in a read and write memory, control energization of the heating means (40) until a set temperature (θ₀)is obtained and causing printing as soon as the set temperature is obtained, and means for cutting off energization of a motor driving the blower outside of the heating periods.

6. Device according to claim 5, characterized in that the means for cutting off energization are controlled by a temperature probe or provide a delay after the end of printing.

7. Device according to claim 5 or 6, characterized in that it maintains the heating means energized until a predetermined delay has expired.
